# EUROPÄISCHE PATENTSCHRIFT

(11) **EP 2 149 423 B1**
(45) Veröffentlichungstag und Bekanntmachung des Hinweises auf die Patenterteilung: **29.09.2010**
(21) Anmeldenummer: 09009655.3
(22) Anmeldetag: 25.07.2009
(51) Int. Cl.: B23Q 11/00, B23Q 1/48

(54) **Fräs,- oder Drehmaschine**
milling machine or lath
Support de tiges de broches pour machines-outils

(30) Priorität: 01.08.2008 DE 102008036002
(43) Veröffentlichungstag der Anmeldung: 03.02.2010
(73) Patentinhaber: SHW Werkzeugmaschinen GmbH, 73433 Aalen (DE)
(72) Erfinder: Klewenhagen, Herbert, 73460 Hüttlingen (DE); Maier, Franz, 73431 Aalen (DE)
(74) Vertreter: Zirkel, Herbert

(56) Entgegenhaltungen:
- EP-A- 0 059 847
- EP-A- 0 386 590
- DE-A1-102006 007 735
- US-A- 3 684 395

## Beschreibung

Die Erfindung betrifft eine Fräs- oder Drehmaschine gemäß dem Oberbegriff des Anspruchs 1, wie z.B aus der EP-A-0 059 847 bekannt.

### Stand der Technik

Ständer-Werkzeugmaschinen, insbesondere Fräsmaschinen für die spanende Bearbeitung von Werkstücken mit umlaufenden Werkzeugen, besitzen einen Spindelstock, der die Arbeitsspindel und deren Antrieb aufnimmt. Der Spindelstock seinerseits befindet sich in einem Spindelstockträger, in dem er horizontal zum Werkstück hin- und von diesem wegbewegt werden kann. Der Spindelstockträger ist am Ständer der Maschine vertikal verfahrbar.

Bauartbedingt wird beim Ausfahren des Spindelstocks aus dem Spindelstockträger durch die zunehmende Entfernung vom Ständer mit dem Werkzeug eine Bahnkurve erzeugt. Da dabei die Werkzeugachse geneigt wird, entstehen Formfehler in den bearbeiteten Werkstücken.

Eine Methode zur Korrektur dieser Formfehler besteht darin, dass die Führungsbahnen am Spindelstock oder Spindelstockträger ballig geformt werden. Dies kann durch Schaben, Fräsen oder Schleifen geschehen. Auch lassen sich entsprechende Formen durch Unterlegen von geeignet geformten Elementen unter der Führungsbahn erzeugen. Derartige Bearbeitungen sind mit nicht unerheblichen Herstellaufwand verbunden.

Eine weitere Möglichkeit der Korrektur bildet das parallele Anheben oder Senken des gesamten Spindelstocks. Zwar lässt sich dadurch der durch die Biegung des Spindelstocks hervorgerufene Höhenversatz des vorderen Endes der Arbeitsspindel ausgleichen. Die fehlerhafte Winkelstellung des Werkzeugs bleibt aber erhalten, so dass sich in Stufen versetzte Fräsbilder am Werkstück ergeben.

Des weiteren sind Verfahren bekannt, durch Vorspannung des Spindelstocks, z. B. durch Verformung mittels hydraulischer Zylinder, die Bahnkurve zu beseitigen oder zu reduzieren. Es leuchtet ohne weiteres ein, dass dies beachtliche konstruktive Zusätze des Spindelstocks mit entsprechenden Kosten erfordert.

Ein von der Anmelderin seit längerem angewandter Lösungsweg besteht darin, die Vertikalbewegung des Spindelstockträgers durch zwei parallel laufende Vorschubspindeln zu erzeugen, die an je einer Seite des Spindelstockträgers angeordnet sind. Mittels entsprechend unterschiedlicher Vorschübe der Spindeln kann der Anstellwinkel des Spindelstockträgers durch Drehung auf den Gleitbahnen am Maschinenständer verändert und damit die Wirkung der Bahnkurve auch bezüglich der Stellung des Werkzeugs ausgeglichen werden.

Diese Möglichkeit, eine Drehung des Spindelstockträgers um eine zum Spindelstock quer liegende Achse herbeizuführen, ist bei Maschinen heutiger Technik nicht gegeben. Aufgrund der hohen Eilgang-Geschwindigkeiten werden für die Vertikalbewegungen des Spindelstockträgers auf dem Ständer Wälzführungen verwendet mit Führungsleisten, die profilierte Querschnitte besitzen und Kräfte und Momente in allen Richtungen aufnehmen. Freiheitsgrade für eine Drehbewegung des Spindelstockträgers sind nicht vorhanden.

Gleichzeitig ist auch die schwingungsdämpfende Wirkung der Gleitflächen auf den Führungsbahnen entfallen.

Aufgabe der Erfindung ist es, die Beweglichkeit des Spindelstockträgers um die horizontale Querachse wieder herbeizuführen und damit die Möglichkeit des Ausgleichs für die nachteilige Bahnkurvenbewegung des Spindelstocks auch für sehr schnell arbeitende Maschinen mit hohen Kraftübertragungsmomenten auf einfache Weise zu schaffen. Eine weitere Aufgabe der Erfindung ist es, wieder ausreichende Dämpfungsflächen zu schaffen. Schließlich soll durch die für die vorgenannten Aufgaben eingesetzten technischen Mittel die Teilgenauigkeit der Werkzeugstellung um ein wesentliches zusätzliches Maß erhöht werden.

### Beschreibung der Erfindung

Erfindungsgemäß wird der Spindelstockträger in einer vertikalen Trennebene aufgeteilt in einen Fahrwagen und einen Tragkörper. Der Fahrwagen ist vertikal am Ständer starr geführt und wird durch mindestens eine Spindel oder eine andere geeignete, mechanische, elektrische, pneumatische oder hydraulische Antriebseinheit auf- und abbewegt. Im Tragkörper wird der Spindelstock seinerseits horizontal starr geführt. Der Tragkörper mit dem Spindelstock ist gegenüber dem Fahrwagen in einem spielfreien Lager um die horizontale Querachse drehbar, so dass die Längsachse des Spindelstocks in unterschiedliche Winkelstellungen, bezogen auf die Horizontale, gebracht werden kann. Zu diesem Zweck liegt der Tragkörper in achsialer Richtung großflächig auf einer Gleitfläche auf dem Fahrwagen auf und wird durch Umgriffe des Fahrwagens in dieser Position gehalten. Alternativ sind auch Umgriffe des Tragkörpers hinter den Fahrwagen denkbar. Radial greift ein um eine Zentralöffnung im Tragkörper umlaufender, aus diesem rückseitig herausragender Lagerring in eine entsprechende Öffnung des Fahrwagens bündig ein. Er dient einerseits zur festen Verbindung zwischen Tragkörper und Fahrwagen bei der Verschiebung des Fahrwagens auf dem Maschinenständer, andererseits als Lager bei Drehbewegungen des Tragkörpers gegenüber dem Fahrwagen. Durch die Gestaltung als umlaufender Ring um eine relativ große Öffnung wird eine Tragfläche geschaffen, die erheblich größer ist als etwa die einer möglichen stabförmigen Zentralachse. Die Öffnungen im Tragkörper und Fahrwagen ersparen gleichzeitig Material und damit tote Masse. Es sei darauf hingewiesen, daß in umgekehrter Konstruktion der Lagering auch Teil des Fahrwagens sein und in die Öffnung des Tragkörpers eingreifen kann.

In einer ersten erfindungsgemäßen Ausführung ist der Tragkörper durch die vorstehend beschriebene Ringverbindung auf dem Fahrwagen drehbar fixiert. Um diese Achse gedreht wird er mittels geeigneter Drehvorrichtungen, wie Torque-Motoren, Schneckentrieben, Hydraulikstempeln u.ä., die, weil allgemein bekannt, hier nicht näher beschrieben werden müssen. Die zum Ausgleich der Bahnkurve erforderliche Drehbewegung beschränkt sich dabei auf minimale Wege im Winkelbereich unter 1°. Die achsiale Fixierung des Tragkörpers gegenüber dem Fahrwagen erfolgt entweder durch die in Kontakt stehenden Gleitflächen beider Körper und die Umgriffe des Fahrwagens hinter den Tragkörper oder durch eine andere geeignete Gegenhalterung am Fahrwagen oder Tragkörper. Zur Vertikalbewegung des Spindelstockträgers wird der Fahrwagen angetrieben und der Tragkörper von ihm mitgenommen.

Erfolgt eine Querbewegung des Spindelstocks in Richtung auf ein Werkstück zu, mittels des Vorschubantriebs, der am Tragkörper angebaut ist, erzeugt die Verlagerung des Spindelstocks zunächst eine zusätzliche Kraft, die radial auf den Tragkörper wirkt. Weiter beschreibt das vordere Ende des Spindelstocks und das Werkzeug die von der Horizontalen nach unten abweichende Ausfahrkurve. Beidem muss durch die Drehvorrichtung entgegengewirkt werden, und zwar dadurch, dass der Tragkörper mit dem Spindelstock und dem Werkzeug auf eine in der Steuerungs-Software hinterlegte, vom Ausfahrweg des Spindelstocks abhängige, Sollstellung nach oben gedreht wird. Der Tragkörper und damit der Spindelstock werden dabei um den Wert gedreht, um den die Bahnkurve von der Horizontalen abgewichen ist, so dass die Neigung der Werkzeugachse vollständig eliminiert werden kann. Die jeweils erreichte Stellung wird durch mindestens ein geeignetes Winkel-Messsystem erfasst, welches die Korrekturbewegung anhält, sobald der Sollwert erreicht ist.

In einer weiteren erfindungsgemäßen Ausführung, die sich insbesondere für große Maschinen mit schweren Spindelstöcken eignet, wird der Spindelstockträger von zwei parallel angeordneten Spindeln vertikal bewegt. Auf den Spindeln laufende Spindelmuttern sind fest verbunden mit je einem Mutternbock und dieser wiederum, in spielfreier Lagerung, mit je einem, am Fahrwagen vorbei reichenden Arm des Tragkörpers. In einer anderen Gestaltung können die Arme des Tragkörpers so geformt sein, dass sie in vertikaler Richtung weit gehend starr, in horizontaler Richtung jedoch geringfügig nachgiebig sind. In diesem Fall kann auf die Lagerung zwischen Mutternböcken und Armen verzichtet werden; die Mutternböcke können fest mit den Armen verbunden sein.

Soll nun eine Vertikalbewegung der Arbeitsspindel erfolgen, so werden beide Vertikalspindeln synchron angetrieben. Sie greifen über die Spindelmuttern und ihre Mutternböcke direkt am Tragkörper an. Durch die Verbindung zwischen Tragkörper und Fahrwagen mittels des Ringlagers, der zwischen beiden Teilen liegenden Gleitfläche und der Umgriffe des Fahrwagens hinter den Tragkörper wird der Fahrwagen entlang der starren Führung auf dem Maschinenständer mitbewegt.

Auch in diesem Fall erzeugt die Bewegung des Spindelstocks einerseits eine zusätzliche Drehkraft, die auf den Tragkörper wirkt, und andererseits die Bahnkurve des Werkzeugs gegenüber der Horizontalen. Dem wird durch unterschiedlichen Vorschub der Spindelmuttern und Muttemböcke und damit vertikalen Versatz zwischen den beiden Enden des Tragkörpers, mit denen die Arme verbunden sind, entgegengewirkt.. Durch zwei diesen Versatz erfassende Messsysteme wird auf den Antrieb der Vertikalspindeln und damit auf den Vorschub der Spindelmuttern und Muttemböcke solange unterschiedlich eingewirkt, bis die gewünschte Drehung des Tragkörpers gegenüber dem Fahrwagen und dem Maschinenständer mit der Anhebung des Werkzeugkopfes am Maschinenständer auf die in der Steuerungs-Software hinterlegte Sollstellung erreicht ist. Wegen der beweglichen Lagerung der Mutternböcke am Tragkörper entsteht durch die Drehung keine Lageänderung der Spindelmuttern zu den Spindeln. Die Achsen von Spindeln und Spindelmuttern bleiben stets vertikal.

Die Vorteile der erfindungsgemäßen Konstruktion stellen sich wie folgt dar:
Eine Drehbewegung des Spindelstocks ist auf der im Prinzip völlig starren Vertikalführung ohne Zwang und Verspannung möglich.

Die Drehbewegung geschieht auf einem spielfrei vorgespannten Lager oder einem Gleitlager, das einerseits mit maximaler Größe und dadurch mit maximaler Steifigkeit und Tragfähigkeit ausgebildet werden kann und andererseits wegen seiner Anordnung außerhalb des Kraftflusses zwischen Ständer und Spindelstock nur eine geringe Materialstärke aufweisen muss mit entsprechend großer Gewichtseinsparung.

Die Lagefixierung des Tragkörpers quer zu seiner Schwenkachse im Fahrwagen auf der Gleitfläche führt zu hoher Dämpfung, da für die Auflage des Tragkörpers die gesamte Fläche des Fahrwagens zur Verfügung steht und die Dämpfungsflächen direkt im vollen Kraftfluß liegen. Es wird damit ein wesentlicher Nachteil der reinen Wälzführungen ausgeglichen, ohne auf die wesentlichen Vorteile der Wälzführungen für hohe Geschwindigkeiten bei geringster Erwärmung verzichten zu müssen. Allerdings ist bei geringeren Antriebsleistungen, bis 30 kW, unter Umständen die Frage der Dämpfung noch vernachlässigbar. Bei Antriebsleistungen bis zu 60 kW und darüber, wie heute und in Zukunft eingesetzt, ist die Dämpfung von wesentlicher Bedeutung geworden. Höhere Dämpfung führt zu ruhigerem Fräsverhalten und erzeugt eine glattere Oberfläche beim bearbeiteten Material.

Weil die Dämpfungsfläche von der Verschiebung des Spindelstocks nicht mehr berührt wird, sind bis zu 500% höhere Eilgänge als bisher möglich.

Die zur Dämpfung wirksame Fläche führt nur geringfügige Bewegungen aus, erwärmt sich nicht und kann praktisch als verschleißfrei betrachtet werden.

Aufgrund der einfachen Geometrie der beiden Teile des Spindelstockträgers ist eine sehr genaue Fertigung durch Schleifen möglich.

Ein weiterer technischer Vorteil, der für die Bearbeitungsgenauigkeit in der Maschine genutzt werden kann, ergibt sich aus der freien beweglichen Anordnung des Tragkörpers gegenüber dem Fahrwagen. Sie erlaubt es, den vertikalen Versatz zwischen den beiden Enden des Tragkörpers über das Maß dessen hinaus zu erhöhen, was zum Ausgleich der Bahnkurve des Spindelstocks nötig ist. Auf diese Weise kann der Spindelstock und damit der an ihm angebrachte Werkzeugkopf zusätzlich gegen die Horizontale verschwenkt werden. Eine Grenze dieser Schwenkbewegung ergibt sich nur bei der zweiten Ausführungsvariante, dem Tragkörper mit Armen, und zwar erst dann, wenn der in der Horizontalen gemessene Abstand zwischen den Muttemböcken kleiner wird als es die elastische Verformung der Vertikalspindeln zulässt. Ohne technische Gefahren ist auch in diesem Fall jedenfalls eine Auslenkung von mindestens einer halben Teilung einer Hirth-Planverzahnung mit 360 Zähnen (=0,5 Grad) erreichbar.

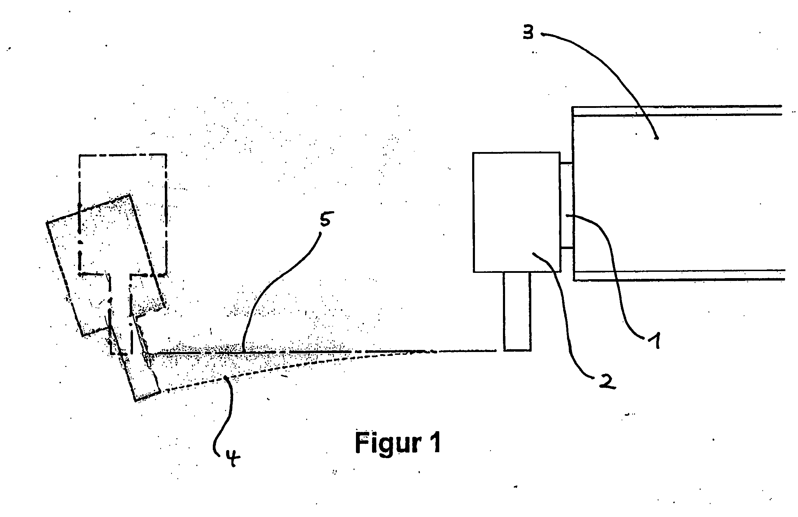

Anhand der Abbildungen Fig.1 bis Fig.8 seien im folgenden die Einzelheiten der Erfindung beispielhaft erläutert.

Fig. 1 ist eine systematische Darstellung der Vorgänge beim Verfahren der Arbeitsspindel (1) mit Werkzeugkopf und Werkzeug (2) in horizontaler Richtung. Wird die Arbeitsspindel (1) im Spindelstock (3) auf das Werkstück zu bewegt, d.h. in Fig. 1 in Richtung nach links, verläuft die Bewegung des Werkzeugkopfes mit Werkzeug (2) in einer nach unten weisenden Bahnkurve (4), die gestrichelt angedeutet ist. Um diesen Kurvenverlauf auszugleichen, wird das vordere Ende des Spindelstocks (3) leicht nach oben gedreht, während das hintere Ende nach unten verschoben wird. Dadurch gelangt der Spindelstock (3) in eine gegenüber der Waagrechten nach links oben verdrehte Lage, die so gewählt wird, daß der Werkzeugkopf mit Werkzeug (2) sich auf einer gedachten korrigierten horizontalen Linie (5) oberhalb der Bahnkurve (4) zu bewegen scheint. Sie ist in Fig. 1 mit Strich-Punkt dargestellt. Der Werkzeugkopf mit Werkzeug (2) behält durch die Drehung des Spindelstocks seine ursprüngliche Lage gegenüber dem Werkstück bei.

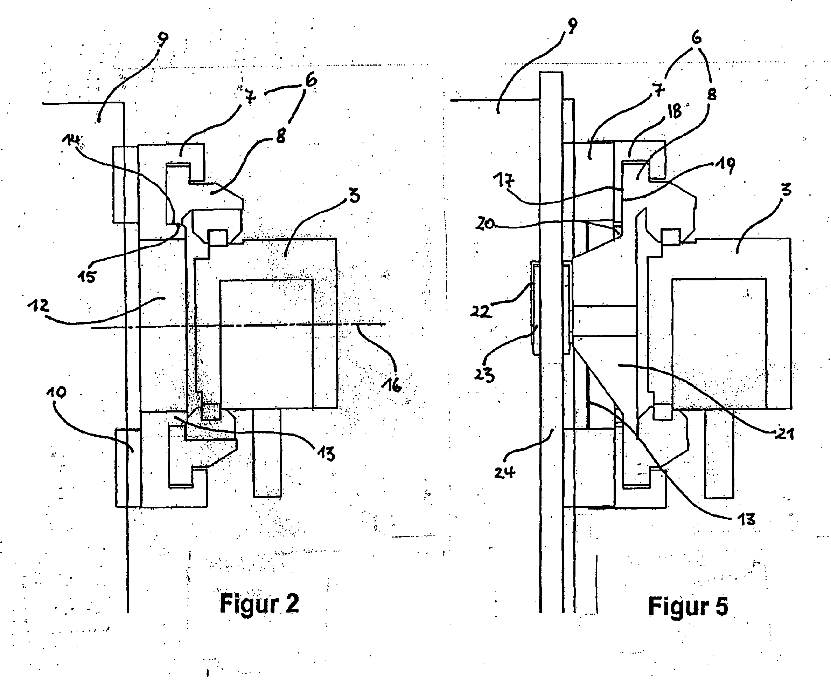

Fig. 2 ist ein senkrechter Schnitt durch den Spindelstockträger (6) mit Spindelstock (3) in der erfindungsgemäßen Gestaltung mit zentraler Querachse. Der Spindelstockträger (6) besteht aus zwei Teilen, dem Fahrwagen (7) und dem Tragkörper (8). Der Fahrwagen (7) ist am Maschinenständer (9) mit Wälzlagern (10) starr geführt. Beide Teile des Spindelstockträgers (6) weisen eine zentrale Öffnung auf. Um die Öffnung (12) des Fahrwagens (7) verläuft ein in die Öffnung (11) des Tragkörpers (8) hineingreifender, mit dem Fahrwagen (7) einstückiger oder fest verbundener Lagerring (13). Die Öffnung (11) des Tragkörpers (8) ist so groß, daß ihre innere Wandung (14) mit der Außenfläche (15) des Lagerrings (13) in präzis gleitendem Kontakt steht. Es ist aber auch möglich, zur Vermeidung von Slick-Stick-Effekten hier Wälzlager anzuordnen. Nicht dargestellte Verstellvorrichtungen ermöglichen das Verdrehen des Tragkörpers (8) gegenüber dem Fahrwagen (7) um ihrer beider zentrale Querachse (16).

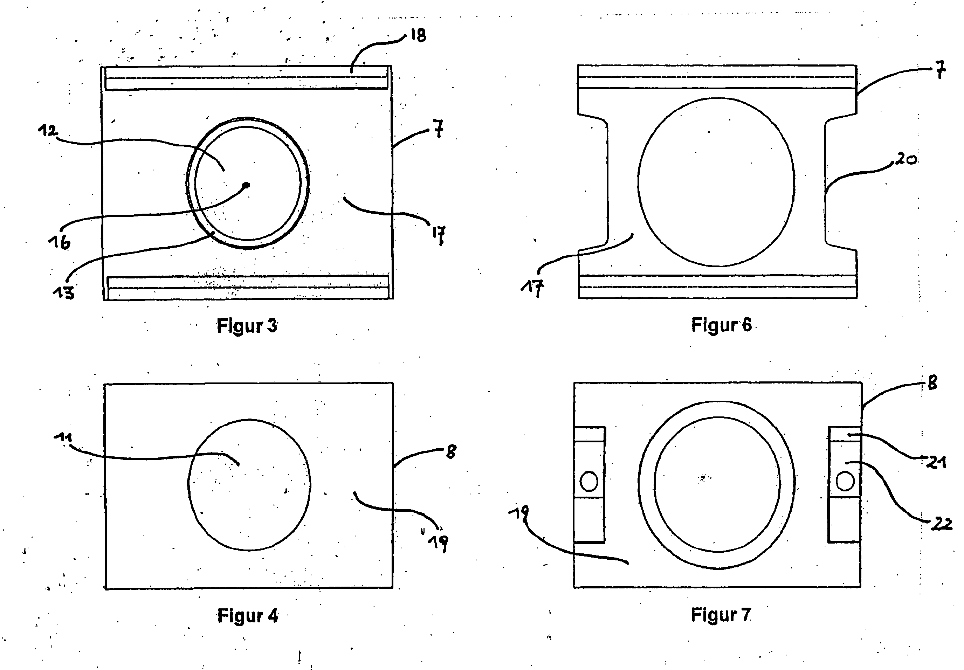

Fig. 3 und 4 sind die Frontsichten auf die einander zugewandten Seiten des Fahrwagens (7) und des Tragkörpers (8) in der in Fig. 2 dargestellten Ausführung. Der Fahrwagen hat in seiner Mitte eine Öffnung (12) relativ großen Durchmessers, in deren Mitte die Querachse (16) des Spindelstockträgers (6) verläuft. Um die Öffnung (12) herum befindet sich die Gleitfläche des Fahrwagens (17). Es ist ersichtlich, dass diese Fläche nahezu die völlige Frontfläche des Fahrwagens (7) einnehmen kann. Am Rand der Öffnung (12) befindet sich der nach vom abragende Lagerring (13). Er kann an den Fahrwagen (7) angeformt oder gesondert gefertigt und am Fahrwagen (7) angeschraubt oder in sonstiger Weise dauerhaft befestigt sein. Im zusammengefügten Zustand ragt er in die Öffnung (11) des Tragkörpers (8) hinein. An seinem oberen und unteren Rand trägt der Fahrwagen (7) die Umgriffe (18). Sie umgreifen winkelförmig den Tragkörper (8). Der Tragkörper (8) zeigt mittig die Öffnung (11) und die diese umgebende Gleitfläche des Tragkörpers (19).

Fig. 5 ist ein senkrechter Schnitt in der Ebene der Achse einer Vertikalspindel durch den Spindelstockträger (6) mit Spindelstock (3) in der erfindungsgemäßen Gestaltung mit Tragkörperarmen und zwei Spindeln. In dieser Darstellung ist alternativ zu der Gestaltung gemäß Fig. 2 der Lagerring (13) Bestandteil des Tragkörpers (8). Durch seitliche Einbuchtungen (20) im Fahrwagen (7) greifen Arme (21) des Tragkörpers (8), der mit seiner Gleitfläche (19) auf der gegenüberliegenden Fläche des Fahrwagens (17) gleitend angeordnet ist. In dieser Position wird er durch die Umgriffe (18) des Fahrwagens (7) gehalten. Die Arme (21) des Tragkörpers (8) tragen an ihrem dem Maschinenständer (9) zugewandten Ende Mutternböcke (22), in denen sich Spindelmuttern (23) befinden. Die Mutternböcke (22) sind an den Armen (21) des Tragkörpers (8) drehbeweglich befestigt. Die Spindelmuttern (23) laufen auf den Kugelrollspindeln (24). Der Spindelstock (3) wird vom Tragkörper (8) geführt und ist in diesem in horizontaler Richtung beweglich.

Fig. 6 und 7 sind die Frontsichten auf die einander zugewandten Seiten des Fahrwagens (7) und des Tragkörpers (8) in der in Fig. 5 dargestellten Ausführung. Der Fahrwagen (7) weist seitlich die zwei Einbuchtungen (20) auf. Dazwischen liegt die Gleitfläche (17). Der Tragkörper (8) zeigt die beiden Arme (21) mit den Muttemböcken (22) sowie die dazwischen liegende Gleitfläche (19), die der Gleitfläche (17) des Fahrwagens (7) entspricht.

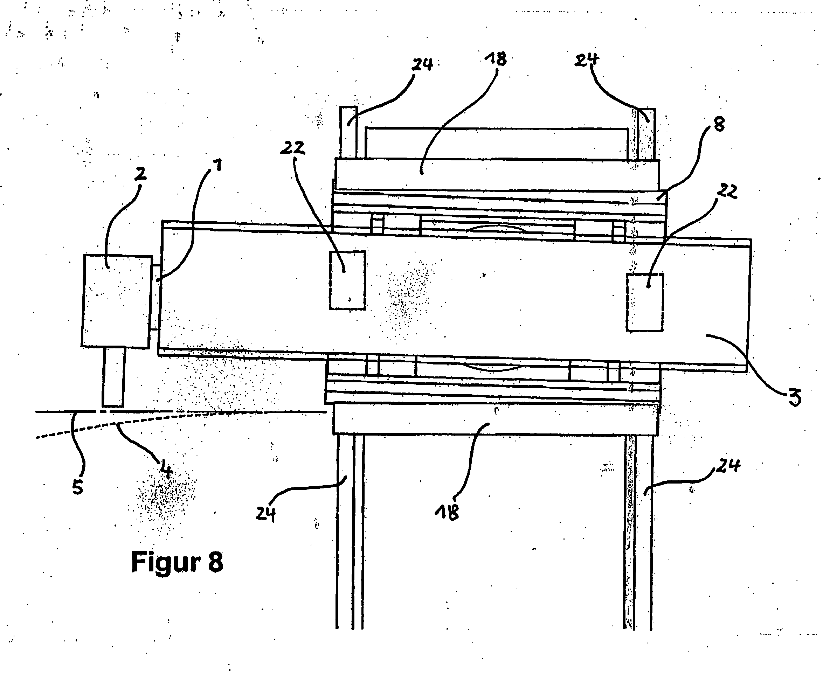

In Fig. 8 ist für die Ausführung gemäß Fig. 5 in einer extremen Stellung die Verdrehung des Tragkörpers (8) gegenüber dem Fahrwagen (7) dargestellt, die sich ergibt, wenn die Bahnkurve (4) des Werkzeugkopfes mit Werkzeug (2) korrigiert werden soll. Die Drehung des Tragkörpers (8) wird nur begrenzt durch das Kopfspiel in den Umgriffen (18) des Fahrwagens (7) einerseits und die höchstzulässige Verbiegung der Kugelrollspindeln (24) andererseits, die dann eintritt, wenn die Spindelmuttern (23) in unterschiedlicher Höhe auf den Kugelrollspindeln (24) stehen. Diese unterschiedliche Höhe wird erreicht, indem die Kugelrollspindeln (24) kurzzeitig mit unterschiedlicher Drehzahl arbeiten.

Im Vorstehenden wurde als Ausgangpunkt der Bahnkurve (4) stets angenommen, daß der Spindelstock (3) in seiner äußersten zurückgezogenen Stellung steht, so daß die Bahnkurve (4) nur von der Horizontalen abwärts verläuft und die Korrektur immer durch Anheben des Werkzeugkopfes (2) erfolgt. Es ist ebensogut denkbar, als Null-Stellung eine mittlere Position festzulegen, etwa bei halb ausgefahrenem Spindelstock (3). In diesem Fall erfolgt die Korrektur der Bahnkurve (4) zur korrigierten Linie (5) bei weiterer Vorwärtsbewegung des Spindelstocks (3) durch Anheben, bei Rückwärtsbewegung des Spindelstocks (3) durch Senken des Werkzeugkopfes (2). Eine Änderung der erfindungsgemäß vorgesehenen technischen Gestaltungen ist dazu nicht erforderlich, lediglich eine entsprechend geänderte Vorgabe für die Steuerung.

Es dürfte einleuchten, dass, soweit die Vertikalbewegung des Spindelstockträgers (6) gegenüber dem Maschinenständer (9) mittels Kugelrollspindeln (24) beschrieben wird, anstelle der Kugelrollspindeln (24) ebenso gut andere geeignete Verstell-Vorrichtungen gewählt werden können, wie z.B. Zahnstangenantriebe, Hydraulikstempel, Kettenzüge, Zahnriementriebe, Linearmotoren und dergl..

Schließlich ist selbstverständlich, dass die erfindungsgemäßen Ausführungen sich auch für weitere Werkzeugmaschinen ähnlicher Bauart, wie z.B. Tiefloch-Bohrmaschinen o.ä., eignen.

### Liste der Bezugszeichen

- 1: Arbeitsspindel
- 2: Werkzeugkopf mit Werkzeug
- 3: Spindelstock
- 4: Bahnkurve
- 5: Korrigierte Linie
- 6: Spindelstockträger
- 7: Fahrwagen
- 8: Tragkörper
- 9: Maschinenständer
- 10: Wälzlager
- 11: Öffnung des Tragkörpers
- 12: Öffnung des Fahrwagens
- 13: Gleitring
- 14: Innere Wandung der Öffnung des Tragkörpers
- 15: Außenfläche des Lagerrings
- 16: Zentrale Querachse
- 17: Gleitfläche des Fahrwagens
- 18: Umgriff
- 19: Gleitfläche des Tragkörpers
- 20: Seitliche Einbuchtung des Fahrwagens
- 21: Arm des Tragkörpers
- 22: Mutternbock
- 23: Spindelmutter
- 24: Kugelrollspindel

## Patentansprüche

1. Fräs- oder Drehmaschine für die Bearbeitung von Werkstücken, mit einer in einem Spindelstock (3) drehbar gelagerten Arbeitsspindel (1), einem Spindelstockträger (6), weicher auf dem Maschinenständer (9) vertikal bewegbar angeordnet ist, und einer Verstellvorrichtung für die Bewegung des Spindelstockträgers (6) auf dem Maschinenständer (9)
**dadurch gekennzeichnet,**
**dass** der Spindelstockträger (6) mindestens aus einem Fahrwagen (7) und einem damit spielfrei verbundenen, um eine gedachte horizontale Querachse drehbares Tragkörper (8) besteht, in welch letzterem der Spindelstock (3) im wesentlichen horizontal läuft.

2. Fräs- oder Drehmaschine gemäß Anspruch 1
**dadurch gekennzeichnet, dass** der Spindelstockträger (6) mindestens eine Drehvorrichtung aufweist, mit der der Tragkörper (8) gegenüber dem Fahrwagen (7) in geänderte Winkelstellungen gebracht werden kann.

3. Fräs- oder Drehmaschine gemäß Ansprüchen 1 und 2,
**dadurch gekennzeichnet,**
**dass** die Verbindung zwischen dem Tragkörper (8) und dem Fahrwagen (7) besteht aus
- einem mit dem Tragkörper (8) verbundenen, konzentrisch mit der Querachse (16) angeordneten Lagerring (13), der in eine entsprechende Öffnung des Fahrwagens (12) mindestens hineinreicht und mit seiner Außenfläche (15) an der inneren Wandung (14) der Öffnung des Fahrwagens (12) gleitend anliegt;
- je einer um die Öffnung (12) des Fahrwagens (7) und den Lagerring (13) des Tragkörpers (8) angeordneten Gleitfläche (17) bzw. (19), wobei die beiden Gleitflächen miteinander mit minimalem Spiel in gleitender Berührung stehen;
- mindestens einem Umgriff (18) des Fahrwagens (7), der den Tragkörper (8) winkelförmig
hintergreift.

4. Fräs- oder Drehmaschine gemäß Ansprüchen 1 bis 3,
**dadurch gekennzeichnet,**
**dass** die Drehvorrichtung zur Bewegung des Tragkörpers (8) gegenüber dem Fahrwagen (7) gesteuert wird durch die Signale einer Winkel-Messvorrichtung, welche Lageänderungen des Spindelstocks (3) bei dessen Vorschub zum Werkzeug hin auf vorgegebene Sollstellungen hin korrigiert.

5. Fräs- oder Drehmaschine gemäß Ansprüche 1 bis 3,
**dadurch gekennzeichnet,**
**dass** der Umgriff (18) sich am Tragkörper (8) befindet und den Fahrwagen (7) winkelförmig hintergreift.

6. Fräs- oder Drehmaschine gemäß Ansprüchen 1 bis 3,
**dadurch gekennzeichnet,**
**dass** statt des Umgriffs (18) am Tragkörper (8) oder am Fahrwagen (7) der Lagerring (13) eine Gestaltung aufweist, die ihn gegenüber dem Fahrwagen (7) axial, mit ausreichendem radialem Spiel, fixiert.

7. Fräs- oder Drehmaschine gemäß Ansprüche in 1 bis 3, 5 und 6,
**dadurch gekennzeichnet,**
**dass** der Lagerring (13) Bestandteil des Fahrwagens (7) ist und in die Öffnung (11) des Tragkörpers (8) mindestens hineinreicht.

8. Fräs- oder Drehmaschine gemäß Ansprüchen 1 bis 7,
**dadurch gekennzeichnet,**
**dass** die Verstellvorrichtung zur Bewegung des Spindelstockträgers (6) auf dem Maschinenständer (9) gebildet wird durch (2) Kugelrollspindeln (24), die mittels auf ihnen laufenden Spindelmuttern (23) und diese haltenden Mutternböcke (22) mit je einem Arm (21) verbunden sind, der einen Bestandteil des Tragkörpers (8) bildet oder an diesem dauerhaft befestigt ist.

9. Fräs- oder Drehmaschine gemäß Anspruch 8),
**dadurch gekennzeichnet,**
**dass** die Mutternböcke (22) mit dem jeweiligen Arm (21) des Tragkörpers (8) durch ein spielfreies Lager drehbar verbunden sind.

10. Fräs- oder Drehmaschine gemäß Anspruch 8,
**dadurch gekennzeichnet,**
**dass** die Mutternböcke (22) mit dem jeweiligen Arm (21) des Tragkörpers (8) fest verbunden sind und der Arm (21) im Verbindungsbereich in vertikaler Richtung weitgehend starr, in horizontaler Richtung geringfügig nachgiebig ist.

11. Fräs- oder Drehmaschine gemäß Ansprüchen 8 bis 10,
**dadurch gekennzeichnet,**
**dass** die Drehung des Tragkörpers (8) gegenüber dem Fahrwagen (7) gesteuert wird durch die Signale zweier Linear-Messvorrichtungen, welche auf die Vorschubgeschwindigkeit der Kugelrollspindeln einwirken und damit die horizontale Lageänderung des Spindelstocks (3) bei dessen Vorschub zum Werkzeug hin auf vorgegebene Sollstellungen hin korrigieren.

## Claims

1. Milling or turning lathe machine for processing of workpieces, with a lead screw (1) pivot-mounted in a head stock (2), a head stock carrier (6), which is arranged vertically movable on the machine stand (9), and an adjustment unit for the movement of the head stock carrier (6) on machine stand (9),
which is **characterised by** the fact,
that the head stock carrier (6) consists at least of a carriage (7) and a support body (8), connected free of clearance, rotatable around an imaginary horizontal lateral axis, in which the head stock (3) travels mainly horizontally.

2. Milling or turning lathe machine according to claim 1
which is **characterised by** the fact,
that the head stock carrier (6) features at least one rotating device, using which support body (8) can be moved into a different angle setting towards carriage (7).

3. Milling or turning lathe machine according to claims 1 and 2,
which is **characterised by** the fact,
that the connection between support body (8) and carriage (7) consists of
- a bearing ring (13) connected to the support body (8) and concentrically arranged with lateral axis (16), which at least reaches into a respective opening of carriage (12) and whose outer area (15) slidingly contacts the inner wall (14) of the opening of carriage (12);
- slide faces (17) and (19), one each arranged around the opening (12) of carriage (7) and the bearing (13) of support body (8), while both slide faces glidingly contact each other with minimum clearance;
- at least one wrap-around (18) of carriage (7), which reaches in an angle behind support body (8).

4. Milling or turning lathe machine according to claims 1 to 3,
which is **characterised by** the fact,
that the rotating device for moving the support body (8) vs. carriage (7) is controlled by the signals of an angle measurement device, which corrects position changes of the head stock (3) vs. specified position setpoints during its feed towards the tool.

5. Milling or turning lathe machine according to claims 1 to 3,
which is **characterised by** the fact,
that wrap-around (18) is located on support body (8) and reaches in an angle behind carriage (7).

6. Milling or turning lathe machine according to claims 1 to 3,
which is **characterised by** the fact,
that instead of the wrap-around (18) in support body (8) or on carriage (7), bearing ring (13) features a design axially fixating itself vs carriage (7) allowing sufficient radial clearance.

7. Milling or turning lathe machine according to claims 1 to 3, 5 and 6,
which is **characterised by** the fact,
that bearing (13) is part of carriage (7) and at least reaches into the opening (11) of support body (8).

8. Milling or turning lathe machine according to claims 1 to 7,
which is **characterised by** the fact,
that the adjustment unit for moving the head stock carrier (6) on machine stand (9) consists of 2 ball bearing screws (24), which are connected by ball screw nuts (23) travelling on them, and nut mounts (22) holding the ball screw nuts, to one arm (21) each, which are integral parts of the support body (8), or which are permanently mounted to support body (8).

9. Milling and/or turning lathe machine according to claim 8
which is **characterised by** the fact,
that the nut mounts (22) are pivot-connected to the respective arm (21) of support body (8) via a bearing free of clearance.

10. Milling and/or turning lathe machine according to claim 8
which is **characterised by** the fact,
that the nut mounts (22) are permanently connected to the respective arm (21) of support body (8) and that arm (21) is vastly rigid in vertical direction and slightly flexible in horizontal direction.

11. Milling or turning lathe machine according to claims 8 to 10,
which is **characterised by** the fact,
that the rotation of support body (8) vs. carriage (7) is controlled by the signals of two linear measuring units, which impact the feed velocity of the ball bearing screws and thus, correct position changes of the head stock (3) vs specified position setpoints during its feed towards the tool.

## Revendications

1. Fraiseuse ou tour pour le travail de pièces, avec une broche (1) rotative couchée dans une poupée fixe (3), un support de poupée fixe (6), lequel est fixé verticalement et mobile sur le montant de la machine (9), et un mécanisme de variation pour le déplacement du support de poupée fixe (6) sur le montant de la machine (9)
**caractérisé en ce que**,
le support de poupée fixe est composé d'au moins un chariot roulant (7) et d'un corps porteur (8) associé ainsi sans jeu, rotative sur un axe transversal horizontal imaginaire, dans lequel la poupée fixe (3) fonctionne essentiellement horizontalement.

2. Fraiseuse ou tour selon la revendication 1
**caractérisé en ce que**
le support de poupée fixe (6) présente un mécanisme de rotation avec lequel le corps porteur (8) peut être mis dans des positions angulaires modifiées par rapport au chariot roulant (7).

3. Fraiseuse ou tour selon les revendications 1 et 2,
**caractérisé en ce que**
l'association entre le corps porteur (8) et le chariot roulant (7) consiste en
- un anneau d'appui (13) relié au corps porteur (8), fixé de manière concentrique à l'axe transversal (16), qui rentre dans une ouverture correspondante du chariot roulant (12) et qui glisse avec sa surface extérieure (15) sur la paroi interne (14) de l'ouverture du chariot roulant (12);
- une surface glissante (17) ou (19) fixée autour de l'ouverture (12) du chariot roulant (7) et de l'anneau d'appui (13) du corps porteur (8), où les deux surfaces glissantes restent en contact glissant entre elles avec un minimum de jeu;
- au moins une enveloppe (18) du chariot roulant (7), qui supporte le corps porteur (8) en forme angulaire.

4. Fraiseuse ou tour selon les revendications 1 à 3, **caractérisé en ce que**
le mécanisme de rotation pour le déplacement du corps porteur (8) par rapport au chariot roulant (7) est commandé par les signaux d'un appareil de mesure d'angles, lequel corrige les changements de position de la poupée fixe (3) sur la position indiquée lors de l'avancement vers l'outil.

5. Fraiseuse ou tour selon les revendications 1 à 3,
**caractérisé en ce que**
l'enveloppe (18) se trouve sur le corps porteur (8) et supporte le chariot roulant (7) en forme angulaire.

6. Fraiseuse ou tour selon les revendications 1 à 3,
**caractérisé en ce que**
au lieu de l'enveloppe (18) sur le corps porteur (8) ou sur le chariot roulant (7) l'anneau d'appui (13) présente un aménagement qui le fixe de manière axiale par rapport au chariot roulant (7) avec suffisamment de jeu radial.

7. Fraiseuse ou tour selon les revendications in 1 à 3, 5 et 6,
**caractérisé en ce que**
l'anneau d'appui (13) est une partie du chariot roulant (7) et rentre au moins dans l'ouverture (11) du corps porteur (8).

8. Fraiseuse ou tour selon les revendications 1 à 7,
**caractérisé en ce que**
le mécanisme de variation pour le déplacement du support de poupée fixe (6) sur le montant de la machine (9) est formé de deux broches de roulement (24), qui sont liées à l'aide d'écrous (23) tournant autour et ces supports d'écrou (22) avec chacun un bras (21), lequel forme une partie du corps porteur (8) ou est fixé sur lui durablement.

9. Fraiseuse ou tour selon la revendication 8,
**caractérisé en ce que**
les supports d'écrou (22) sont liés à chaque bras (21) du corps porteur (8) par un roulement sans jeu et mobiles.

10. Fraiseuse ou tour selon la revendication 8,
**caractérisé en ce que**
les supports d'écrou (22) sont liés de manière fixe à chaque bras (21) du corps porteur (8) et le bras (21) est fixe dans la zone de liaison en position verticale et est légèrement flexible en position horizontale.

11. Fraiseuse ou tour selon les revendications 8 à 10,
**caractérisé en ce que**
la rotation du corps porteur (8) par rapport au chariot roulant (7) est commandé par les signaux de deux mécanismes linéaires de mesure, lesquels agissent sur la vitesse d'avancement des broches de roulement et corrigent ainsi les changements de position horizontale de la poupée fixe (3) sur la position indiquée lors de l'avancement vers l'outil.
